# EUROPEAN PATENT APPLICATION

(11) **EP 2 202 093 A1**
(43) Date of publication of application: **30.06.2010**
(21) Application number: 09179893.4
(22) Date of filing: 18.12.2009
(51) Int. Cl.: B60C 9/12

(54) **Tire comprising a sealant layer**

(30) Priority: 23.12.2008 US 140133; 23.11.2009 US 623627
(71) Applicant: The Goodyear Tire & Rubber Company, Akron, OH 44316-0001 (US)
(72) Inventor: Majumdar, Ramendra Nath, Hudson, OH 44236 (US); Puhala, Aaron Scott, Kent, OH 44240 (US); Marks, Patrick David, Uniontown, OH 44685 (US)
(74) Representative: Kutsch, Bernd

(57) **Abstract**

A tire with a built in sealant comprising a carcass, an outer circumferential tread (60), and a layer of sealant (7) disposed radially inward of the tread (60) is described. The layer of sealant (7) has a first lateral outer edge (40) and a second lateral outer edge (50). An interlayer (10) is disposed between the layer of sealant (7) and the circumferential tread (60). At least one inner liner layer (20) is disposed on each side of the layer of sealant (7), the at least one inner liner layer (20) adjoining the first later outer edge (40) and the second lateral outer edge (50) of the layer of sealant (7).

## Description

### Background of Invention

This invention relates to a tire having a puncture sealant layer.

### Background of the Invention

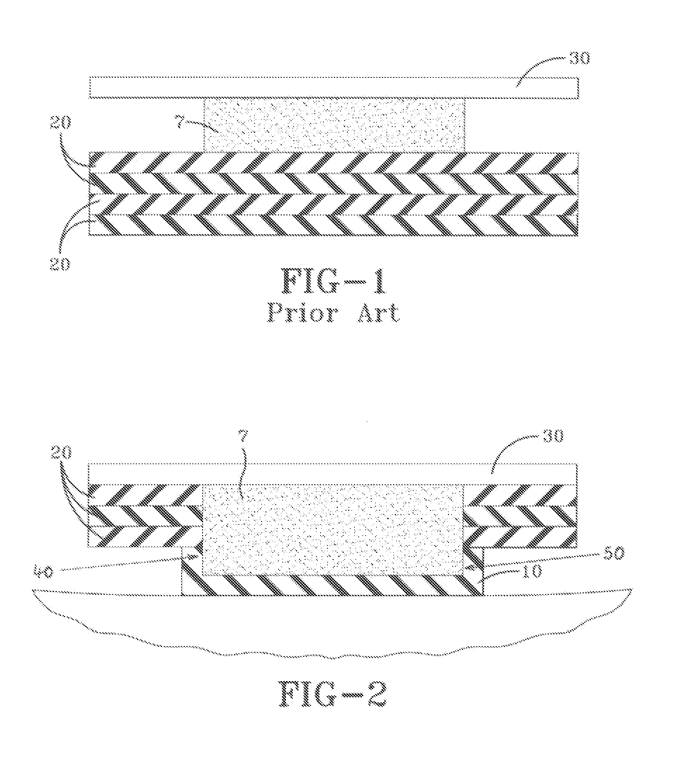

It is known in the prior art to apply puncture sealants made of puncture sealing rubber or plastic material on the crown portion of the tire so that when a sharp object such as a nail pierces the tire, the tire sealant forms a seal around the puncture. Tire sealants of this nature tend to be rather thick, and having a thickness on the order of four to six times the thickness of a typical inner liner. Thus as shown in Fig. 1, additional layers of inner liner 20 are used to hold the sealant 7 in place. These extra layers of inner liner add cost and weight to the tire, and may additionally contribute to heat build up. Thus an improved construction of a tire having a sealant layer is desired.

### Summary of the Invention

The invention relates to a tire according to claim 1.

Dependent claims refer to preferred embodiments of the invention.

In one aspect of the invention, there is no inner liner layer disposed radially inward of the layer of sealant. Instead, the layer of sealant preferably disrupts the at least one inner liner layer and is interposed between the at least one inner liner layer.

The interlayer may be a protective layer. The interlayer may be made of a butyl or a bromobutyl rubber, of a general purpose rubber, of a porous material such as non-woven, or may be a gas permeable layer.

In one aspect of the invention, the tire comprises a layer of squeegee (or a cover layer) radially inward of the layer of sealant.

The layer of squeegee may be disposed adjacent to the layer of sealant and is preferably the radially innermost layer of the tire at least to the extend the layer of squeegee is adjacent to the layer of sealant.

The layer of sealant preferably has a width less than the width of the layer of squeegee. The layer of squeegee is preferably disposed radially inward over at least a portion of the at least one inner liner layer disposed on each side of the layer of sealant and also over the layer of sealant.

The tire may comprise a plurality of adjacent inner liner layers adjoining the first later outer edge and the second lateral outer edge of the layer of sealant.

Preferably, the at least one inner liner layer is a butyl or a bromobutyl rubber layer.

Preferably, the total thickness of the at least one inner liner layer disposed on each side of the layer of sealant is two or more times the thickness of the interlayer.

The layer of sealant may have a width in the range of from 10 to 25 cm, alternatively from 15 to 25 cm.

In a preferred aspect of the invention, the sealant material in the layer of sealant is colored.

Preferably, the sealant material in the layer of sealant comprises, based upon parts by weight per 100 parts by weight of partially depolymerized butyl rubber exclusive of carbon black:
(A) a partially organoperoxide-depolymerized butyl rubber as a copolymer of isobutylene and isoprene, wherein the butyl rubber, prior to such depolymerization, comprises of 0.5 to 5 weight percent units derived from isoprene, and correspondingly from 95 to 99.5 weight percent units derived from isobutylene;
(B) a particulate reinforcing filler comprising:
   (1) 20 to 50 phr of silica, or
   (2) 15 to 30 phr of silica and 5 to 20 phr of clay, or
   (3) 15 to 30 phr of silica and 5 to 20 phr of calcium carbonate, or
   (4) 15 to 30 phr of silica, 5 to 15 phr of clay and 5 to 15 phr of calcium carbonate;
(C) optionally from zero to 6 phr of short organic fibers;
(D) optionally a colorant of other than a black color wherein the colorant is selected from at least one of organic pigments, inorganic pigments and dyes; and
(E) optionally from zero to 20 phr of rubber processing oil.

The layer of sealant may have a thickness in a range of from 3 mm to 7 mm, alternatively about 5 mm.

The total thickness of the at least one inner liner layer disposed on each side of the layer of sealant may be in a range of from 2 mm to 4 mm, alternatively about 3 mm.

The thickness of the layer of squeegee may be in a range of from 1 to 2 mm, alternatively 1.2 to 1.6 mm or 1.4 mm.

The thickness of the interlayer may be in a range of from 0.5 to 1.5 mm, alternatively from 0.8 to 1.2 mm such as about 1 mm.

In a preferred aspect of the invention, the interlayer is a U-shaped or tub-shaped layer extending along to a portion of the first later outer edge and along a portion of the second lateral outer edge of the layer of sealant. The U-shaped layer preferably adjoins the at least one inner liner layer disposed on each side of the layer of sealant.

The tire in accordance with the invention may be a tire with a post-cure applied layer of sealant.

### Definitions

"Axial" and "axially" mean the lines or directions that are parallel to the axis of rotation of the tire.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction; it can also refer to the direction of the sets of adjacent circular curves whose radii define the axial curvature of the tread as viewed in cross section.

"Inner Liner" means the layer or layers of elastomer or other material that form the inside surface of a tubeless tire and that contain the inflating fluid within the tire.

"Radial" and "radially" mean directions radially toward or away from the axis of rotation of the tire.

"Sidewall" means a portion of a tire between the tread and the bead.

### Brief Description of the Drawings

The structure, operation, and advantage of the invention will become further apparent upon consideration of the following description taken in conjunction with the accompanying drawings wherein:
Figure 1 is a prior art simplified schematic view of a cross section of a laminate containing the sealant layer;
Figure 2 is a cross sectional view of the laminate containing the sealant of the present invention; and

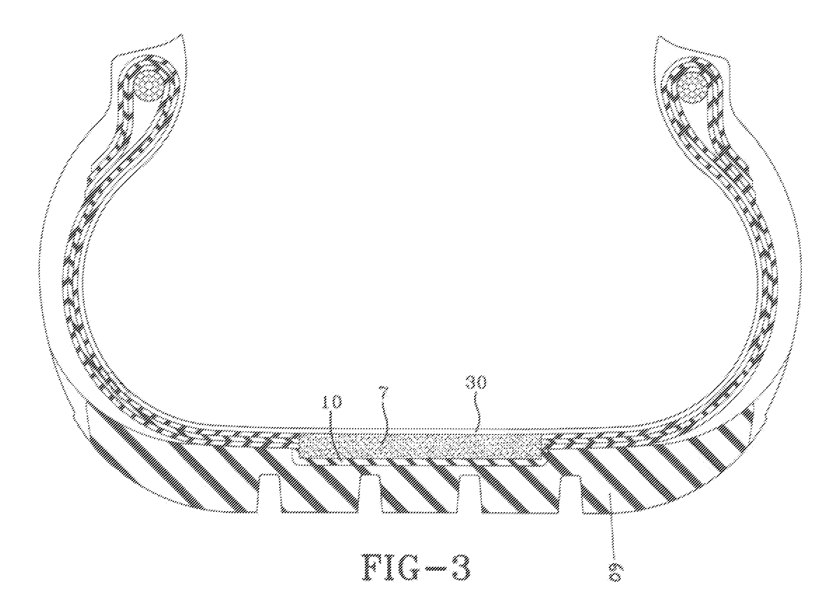

Figure 3 is a cross sectional view of a cured tire with barrier of the present invention.

### Detailed Description of the Invention

Referring now to Figure 1, there is illustrated a cross-sectional view of a prior art laminate containing a sealant layer to form a self-sealing pneumatic tire. The tire may be any type of tire, such as a truck tire, a light truck tire or a passenger tire. The tire includes sidewalls, a supporting tire carcass, a pair of beads, and an outer circumferential tread. The sidewalls extend radially inward from the axial outer edges of the tread portion to join the respective beads. The carcass acts as a support structure for the tread and sidewalls, and comprises one or more layers of ply.

As shown in Fig. 2, the carcass of the tire of the present invention has a radially innermost protective layer 10 to prevent contamination of tire curing bladder with sealant material which is generally semi-solid. This protective layer may be made of a butyl rubber or of a general purpose rubber because barrier properties are not needed for this layer. The layer may also be porous material like non-woven which will prevent blister formation from trapped gases generated during sealant precursor degradation. Next, a built in sealant layer 7 is applied on top of or radially outward of the protective layer 10. The sealant layer 7 may have a width less than the width of a squeegee 30. On each side of the sealant layer 7, preferably two to three layers of inner liner 20 made of butyl rubber are applied. A layer of squeegee 30 (or cover layer) is applied over the inner liner and the sealant layer.

The advantage to the above described tire construction is the saving in butyl rubber. The sealant layer is utilized to provide the needed barrier properties due to its butyl rubber composition. Thus, excess inner liner is eliminated, resulting in reduced tire weight, a cheaper tire and reduced tire heat generation.

### Sealant Composition

The sealant 7 may include any suitable sealant composition with barrier properties, known to those skilled in the art, such as rubber or elastomer compositions and plastic compositions. One suitable polymer composition suitable for use is described in US-A- 4,895,610, the entirety of which is incorporated by reference. The polymer compositions described therein include the following composition by weight: 100 parts of a butyl rubber copolymer, 10 to 40 parts of carbon black, 5 to 35 parts of an oil extender, and from 1 to 8 parts of a peroxide vulcanizing agent. A second polymer composition includes the following composition by weight: 100 parts of a butyl rubber copolymer, 20 to 30 parts of carbon black, 8 to 12 parts of an oil extender, and from 2 to 4 parts of a peroxide vulcanizing agent.

The sealant 7 may also comprise a colored polymer composition as described in US-A- 7,073,550, the entirety of which is incorporated herein by reference. The colored polymer composition comprises, based upon parts by weight per 100 parts by weight of said partially depolymerized butyl rubber exclusive of carbon black:
(A) a partially organoperoxide-depolymerized butyl rubber as a copolymer of isobutylene and isoprene, wherein said butyl rubber, prior to such depolymerization, comprises 0.5 to 5, preferably within a range of from 0.5 to 1, weight percent units derived from isoprene, and correspondingly from 95 to 99.5, preferably within a range of from 99 to 99.5, weight percent units derived from isobutylene;
(B) particulate reinforcing filler comprising:
   (1) 20 to 50 phr of silica such as synthetic amorphous silica, preferably precipitated silica, or
   (2) 15 to 30 phr of silica such as synthetic amorphous silica, preferably precipitated silica, and 5 to 20 phr of clay, preferably kaolin clay, or
   (3) 15 to 30 phr of silica such as synthetic amorphous silica, preferably precipitated silica, and 5 to 20 phr of calcium carbonate,
   (4) 15 to 30 phr of silica such as synthetic amorphous silica, preferably precipitated silica, 5 to 15 phr of clay, preferably kaolin clay, and 5 to 15 phr of calcium carbonate;
(C) from zero to 6, alternately 0.5 to 5, phr of short organic fibers
(D) a colorant of other than a black color wherein said colorant is selected from at least one of organic pigments, inorganic pigments and dyes, preferably from organic pigments and inorganic pigments;
(E) from zero to 20, alternately 2 to 15, phr of rubber processing oil, preferably a rubber processing oil having a maximum aromatic content of 15 weight percent, and preferably a naphthenic content in a range of from 35 to 45 weight percent and preferably a paraffinic content in a range of 45 to 55 weight percent.

Another sealant polymer composition which may be utilized by the invention is described in US-A- 6,837,287, the entirety of which is hereby incorporated by reference.

Further, any sealant polymer composition may also be used with the invention that has a polymer composition with air barrier properties.

The thickness of the sealant can vary greatly in an unvulcanized puncture sealant-containing tire. Generally, the thickness of the sealant composition layer may range from 0.13 cm (0.05 inches) to 1.9 cm (0.75 inches). In passenger and truck tires it is normally desired for the sealant composition layer to have a thickness of 0.32 cm (0.125 inches) to 0.62 cm (0.25 inches). The sealant width may vary depending upon the tire size, but may typically be in the range of 3 to 6 inches.

After the unvulcanized pneumatic rubber tires of this invention are assembled they are vulcanized using a normal tire cure cycle. The tires of this invention can be cured over a wide temperature range depending somewhat upon the size of the tire and the degree of desired depolymerization of the butyl rubber as well as the thickness of the sealant layer itself and sufficient to at least partially depolymerize said sealant precursor layer.

### EXAMPLE 1

A 1.6 mm thick sealant precursor compound was obtained. Its barrier properties were measured using Mocon and are shown in column 1 Table 1. Then the compound was heated for 23 minutes at 150 C and barrier properties after sealant formation was again determined and shown in column 2 of Table 1. Barrier properties of a typical bromobutyl based rubber of thickness of 1 mm (40 mil) is also shown in Table 1.

**Table 1 Comparison of barrier properties of a bromobutyl based inner liner with that of sealant compound**

| | G1999 (as received) | G1999 (23 min / 150 C) | Bromobutyl tire inner liner |
|---|---|---|---|
| Thickness (mm) | 1.61 | 2.6 | 1 |
| Transmission Rate cc/[m2-day] | 37 | 33 | 80 |
| Permeation Rate cc-mm/[m2-day] | 60 | 85 | 80 |

Table 1 shows that barrier properties of G1999 sealant in equivalent thickness is similar to bromobutyl liner. Thus four layers of innerliner on top of a thick built-in sealant (G1999) layer provide an excessive barrier in the crown area of tire. The novel laminate design is proposed to eliminate redundant materials from tires with built-in sealant.

## Claims

1. A tire with a built in sealant, the tire comprising a carcass, an outer circumferential tread (60), and a layer of sealant (7) disposed radially inward of the tread (60), the layer of sealant (7) having a first lateral outer edge (40) and a second lateral outer edge (50), wherein an interlayer (10) is disposed between the layer of sealant (7) and the circumferential tread (60), and wherein at least one inner liner layer (20) is disposed on each side of the layer of sealant (7), the at least one inner liner layer (20) adjoining the first later outer edge (40) and the second lateral outer edge (50) of the layer of sealant (7).

2. The tire of claim 1 wherein there is no inner liner layer (20) disposed radially inward of the layer of sealant (7); and/or wherein the layer of sealant (7) disrupts the at least one inner liner layer (20) and is interposed between the at least one inner liner layer (20).

3. The tire of claim 1 or 2 wherein the interlayer (10) is a protective layer; and/or wherein the interlayer (10) is made of a butyl or a bromobutyl rubber, of a general purpose rubber, is made of or comprises a porous material such as non-woven, or is a gas permeable layer.

4. The tire of at least one of the previous claims comprising a layer of squeegee (30) radially inward of the layer of sealant (7).

5. The tire of claim 4 wherein the layer of squeegee (30) is disposed adjacent to the layer of sealant (7) and is the radially innermost layer of the tire at least to the extend the layer of squeegee (30) is adjacent to the layer of sealant (7).

6. The tire of claim 4 or 5 wherein the layer of sealant (7) has a width less than the width of the layer of squeegee (30); and/or wherein the layer of squeegee (30) is disposed radially inward over at least a portion of the at least one inner liner layer (20) disposed on each side of the layer of sealant (7) and over the layer of sealant (7).

7. The tire of at least one of the previous claims comprising a plurality of adjacent inner liner layers (20) adjoining the first later outer edge (40) and the second lateral outer edge (50) of the layer of sealant (7).

8. The tire of at least one of the previous claims wherein the at least one inner liner layer (20) is a butyl or a bromobutyl rubber layer.

9. The tire of at least one of the previous claims wherein the total thickness of the at least one inner liner layer (20) disposed on each side of the layer of sealant (7) is two or more times the thickness of the interlayer (10).

10. The tire of at least one of the previous claims wherein the layer of sealant (7) has a width in the range of from 10 to 25 cm, alternatively from 15 to 25 cm.

11. The tire of at least one of the previous claims wherein the sealant material in the layer of sealant (7) is colored.

12. The tire of at least one of the previous claims wherein the sealant material in the layer of sealant (7) comprises, based upon parts by weight per 100 parts by weight of partially depolymerized butyl rubber exclusive of carbon black:
(A) a partially organoperoxide-depolymerized butyl rubber as a copolymer of isobutylene and isoprene, wherein the butyl rubber, prior to such depolymerization, comprises of 0.5 to 5 weight percent units derived from isoprene, and correspondingly from 95 to 99.5 weight percent units derived from isobutylene;
(B) a particulate reinforcing filler comprising:
(1) 20 to 50 phr of silica, or
(2) 15 to 30 phr of silica and 5 to 20 phr of clay, or
(3) 15 to 30 phr of silica and 5 to 20 phr of calcium carbonate, or
(4) 15 to 30 phr of silica, 5 to 15 phr of clay and 5 to 15 phr of calcium carbonate;
(C) optionally from zero to 6 phr of short organic fibers;
(D) optionally a colorant of other than a black color wherein the colorant is selected from at least one of organic pigments, inorganic pigments and dyes; and
(E) optionally from zero to 20 phr of rubber processing oil.

13. The tire of at least one of the previous claims wherein the tire has at least one, preferably two, three or all, of the following features:
(i) the layer of sealant (7) has a thickness in a range of from 3 mm to 7 mm, alternatively about 5 mm;
(ii) the total thickness of the at least one inner liner layer (20) disposed on each side of the layer of sealant (7) is in a range of from 2 mm to 4 mm, alternatively about 3 mm;
(iii) the thickness of the layer of squeegee (30) is in a range of from 1 to 2 mm, alternatively 1.2 to 1.6 mm or 1.4 mm;
(iv) the thickness of the interlayer (10) is in a range of from from 0.5 to 1.5 mm, alternatively from 0.8 to 1.2 mm such as about 1 mm.

14. The tire of at least one of the previous claims wherein the interlayer (10) is a U-shaped or tub-shaped layer extending along to a portion of the first later outer edge (40) and along a portion of the second lateral outer edge (50) of the layer of sealant (7).

15. The tire of claim 14 wherein the U-shaped layer adjoins the at least one inner liner layer (20) disposed on each side of the layer of sealant (7).
